# EUROPEAN PATENT APPLICATION

(11) **EP 0 601 691 A1**
(43) Date of publication of application: **15.06.1994**
(21) Application number: 93306859.5
(22) Date of filing: 31.08.1993
(51) Int. Cl.: G11B 5/53, G11B 5/11

(54) **Tape recorder having a rotary head drum**

(30) Priority: 11.12.1992 JP 332082/92
(71) Applicant: TEAC CORPORATION, Musashino-shi Tokyo (JP)
(72) Inventor: Itoya, Shoji, Nishitama-Gun, Tokyo (JP); Takanohashi, Masayuki, Hidaka-Shi, Saitama-ken (JP); Sawai, Yoshikazu, Ikeda-shi, Osaka-Fu (JP)
(74) Representative: Waldren, Robin Michael

(57) **Abstract**

A tape recorder has a C/N ratio sufficient to derive a digital signal. The rotary head drum (11) comprises a lower drum (41), a rotatable upper drum (46) having recording heads (17-1,17-2) and reproducing heads (18-1,18-2), and a rotary transformer (47) provided between the lower drum (41) and the upper drum (46) so as to perform a transmission of signals therebetween. A magnetic tape is wound on the rotary head drum (11) at a predetermined angle which is greater than an angle formed between one of the recording heads (17-1,17-2) and an adjacent one of the reproducing heads (18-1,18-2). The rotary head drum (11) comprises shielding members made of steel plate for shielding interconnecting parts between each of the recording heads (17-1,17-2) and the reproducing heads (18-1,18-2) and the rotary transformer (47), the shielding members (80-1,80-2,100-103) individually shielding each of the interconnecting parts (91,93,95,97) including respective recording heads (17-1,17-2) and reproducing heads (18-1,18-2). The rotary head drum (11) further comprises rotary transformer shielding members (110,111,120,121), provided to the rotary transformer (47), for shielding against an external noise entering into the rotary transformer (47).

## Description

### BACKGROUND OF THE INVENTION

The present invention relates to a digital audio tape recorder (hereinafter abbreviated as DAT), and more particularly to a DAT having a rotary head drum.

In recent years, development of multi-channel type DAT having a rotary head drum has progressed. Here, in order to increase the number of channels for DAT, it is necessary to increase recording density on a tape. It is considered that recording density on a tape will be increased by increasing a contacting time of the tape with the rotary head drum by increasing a winding angle of a tape on a rotary head drum. However, if the winding angle of the tape is increased, there is a possibility that adjacent magnetic heads positioned along the periphery of the rotary head drum are operated simultaneously. Generally, an operation of a magnetic head is started when the magnetic head reaches the portion of the drum where the tape is wound, and is stopped when the magnetic head is moved away from the tape. Accordingly, if the winding angle is increased, during the time one magnetic head is in contact with the tape within the winding angle range, another magnetic head will enter into the winding angle range. In such a case, since adjacent magnetic heads are put in operation at the same time and they may receive noise effects from each other, it is necessary for the rotary head drum to be provided with noise eliminating means.

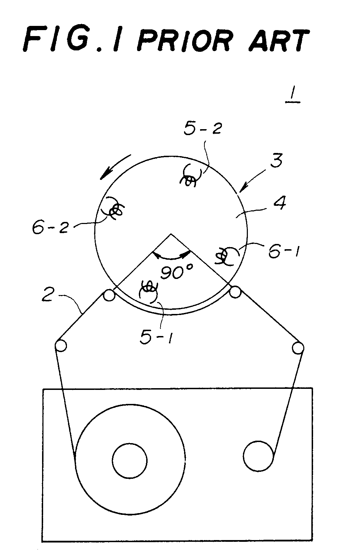

Fig.1 shows a rotary head drum mechanism of a conventional DAT. In the rotary head drum mechanism 1 shown in Fig.1, a portion of a magnetic tape 2 is wound on a rotary head drum 3 by 90 degrees. The rotary head drum 3 comprises an upper rotational drum 4 provided with a pair of reproducing magnetic heads 5-1, 5-2 and a pair of recording magnetic heads 6-1, 6-2. The magnetic heads 5-1, 5-2, 6-1, 6-2 are arranged in an approximately equal intervals, i.e. at approximately every 90 degrees along the periphery of the upper rotational drum 4.

In the above-mentioned rotary head drum, if a winding angle of the tape 2 onto the drum 3 exceeds 90 degrees, the adjacent ones of recording heads 6-1, 6-2 and the reproducing heads 5-1, 5-2 will come into operation simultaneously depending on a mode of operation of the DAT. Thus, a component of a recording signal leaking from one of the recording heads 6-1, 6-2 may enter into one of the reproducing heads 5-1, 5-2, positioned adjacent to the signal leaking recording head 5-1 or 5-2. This component of the recording signal becomes a noise having undesired effects against the reproducing heads 5-1 or 5-2, and thus a ratio of carrier to noise (C/N ratio) is decreased.

### SUMMARY OF THE INVENTION

It is a general object of the present invention to provide a novel and useful tape recorder having a rotary head drum in which tape recorder the above-mentioned problems are eliminated.

A more specific object of the present invention is to provide a tape recorder having a rotary head drum in which tape recorder leaking of a component of a recording signal and entering of the component of the recording signal into a reproducing head are prevented.

Another object of the present invention is to provide a tape recorder having a rotary head drum in which tape recorder effects of static electricity and of an external magnetic field are decreased.

In order to achieve the above-mentioned objects, a tape recorder according to the present invention comprises a rotary head drum comprising a lower drum, a rotatable upper drum having recording heads and reproducing heads, and a rotary transformer provided between the lower drum and the upper drum so as to perform a transmission of signals therebetween. A magnetic tape is wound on the rotary head drum at a predetermined angle which is greater than an angle formed between one of the recording heads and an adjacent one of the reproducing heads. The rotary head drum comprises shielding members for shielding interconnecting parts between each of the recording heads and the reproducing heads and the rotary transformer, the shielding members individually shielding each of the interconnecting parts including respective recording heads and reproducing heads. The rotary head drum further comprises rotary transformer shielding members provided to the rotary transformer, for shielding against an external noise intruding into the rotary transformer.

According to the present invention, a signal having a high C/N ratio can be reproduced without having effects of a component of a recording signal, static electricity and an external magnetic field.

Other objects features and advantages of the present invention will become more apparent from the following detailed description when read in conjunction with the accompanying drawings.

### BRIEF DESCRIPTION OF THE DRAWINGS

Fig.1 is an illustration of a rotary head drum mechanism of a conventional DAT;
Fig.2 is a block diagram of a structure of an embodiment of a DAT according to the present invention;
Fig.3 is a cross sectional view of a rotary head drum used in the DAT shown in Fig.2;
Fig.4 is a perspective view of shielding members for interconnecting part;
Fig.5 is a plan view of the rotary head drum shown in Fig.2;
Fig.6A is a cross sectional view taken along a line VIA-VIA of Fig.5; and Fig6B is a cross sectional view taken along a line VIB-VIB of Fig.5;
Fig.7A is a bottom view of an upper head; and Fig.7B is a side view of the upper head in a state where the upper head is positioned upside down; and
Figs.8 are views of a stator of a rotary transformer shown in Fig.2; Fig.8A showing a plan view; and Fig.8B showing a partially cut away side view thereof.

### DETAILED DESCRIPTION OF THE PREFERRED EMBODIMENT

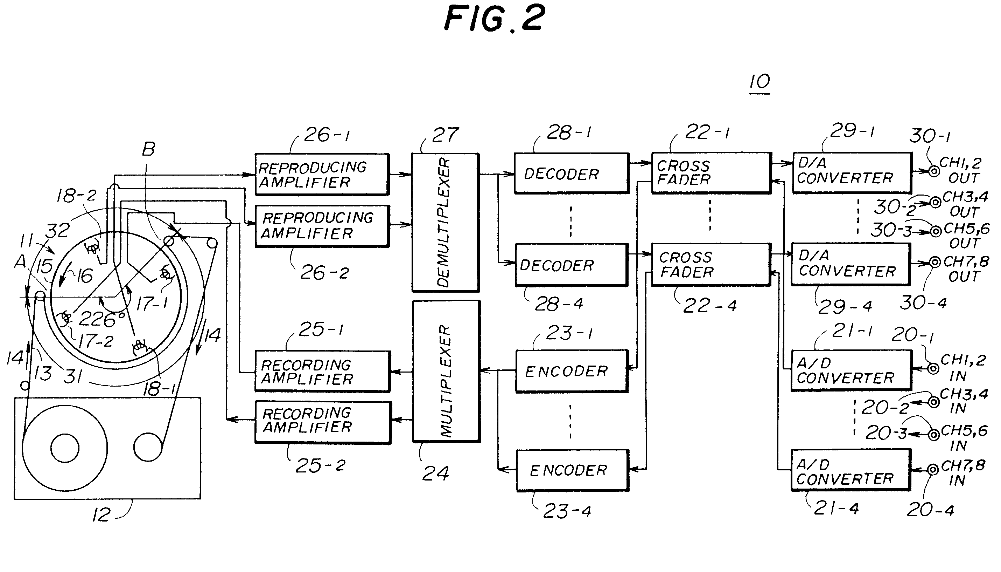

A description will now be given, with reference to Fig.2, of an embodiment of a DAT according to the present invention.

Fig.2 is a block diagram of a structure of an embodiment of a DAT 10 according to the present invention. An 8mm video tape cassette 12 in which a magnetic tape 13 is accommodated is used to the DAT 10. The DAT 10 has 8 channels, and has a rotary head drum 11 which functions as a recording/reproducing drum.

Since 8 channels are adopted in the DAT 10, a winding angle of the tape 13 on the rotary head drum 11 is set to 226 degrees, which winding angle is much greater than 90 degrees. The magnetic tape 13 runs in a direction indicated by an arrow 14, while an upper drum of the rotary head drum 11 rotates in the counterclockwise direction as indicated by an arrow 16.

The upper drum 15 is provided with recording heads 17-1 and 17-2, each located on at one side of a diameter of the upper drum 15 so as to be across from each other; reproducing heads 18-1 and 18-2 are also provided, each located at one side of another diameter of the upper drum 15 so as to be across from each other. The recording heads 17-1 and 17-2 are provided in respective positions taking into consideration a time delay needed for signal processing by a digital signal processing unit. In the DAT 10 of the present embodiment, each of the recording heads 17-1, 17-2 is positioned approximately 90 degrees off from the respective one of the reproducing heads 18-1, 18-2 along the circumference of the upper drum 15.

Since the DAT 10 is provided with recording heads 17-1, 17-2 and the reproducing heads 18-1, 18-2, the DAT 10 has additional functions such as a function of punch-in/punch-out and an over-dubbing function.

A description will now be given, with reference to Fig.2, of an operation of the DAT 10.

In Fig.2, signals for channels (CH) 1 and 2 are input to a terminal 20-1, signals for CH3 and CH4 to a terminal 20-2, signals for CH5 and CH6 to a terminal 20-3, and signals for CH7 and CH8 to a terminal 20-4. The input signals are supplied to the recording heads 17-1, 17-2, respectively, via A/D converters 21-1 - 21-4, cross faders 22-1 - 22-4, encoders 23-1 - 23-4, a multiplexer 24, and recording amplifiers 25-1, 25-2. The input signals are recorded on the magnetic tape 13 accordingly by the recording heads 17-1, 17-2.

Digital signals for each channel reproduced from the tape 13 by the reproducing heads 18-1, 18-2 are supplied to D/A converters 29-1 - 29-4 via reproducing amplifiers 26-1, 26-2, a demultiplexer 27, decoders 28-1 - 28-4, cross faders 22-1 - 22-4, respectively, and are converted into analog signals, then the analog signals are output from output terminals 30-1 - 30-4.

When performing additional recording on the tape 13 while checking reproduced records, the reproducing heads 18-1, 18-2 and the recording heads 17-1, 17-2 are operated simultaneously.

An operation of each of the heads 17-1, 17-2, 18-1, 18-2 is started when it reaches to a position indicated by A in Fig.2, and the operation is stopped when it reaches to a position indicated by B. In Fig.2, the three heads 17-1, 18-1, 17-2 are positioned within an operational area 31. Thus, when the DAT 10 is in a mode where recording and reproducing are performed at the same time, the three heads 17-1, 18-1, 17-2 are in an operating condition.

In the above-mentioned situation, a component of the recording signal leaking from the recording heads 17-1, 17-2 may enter into the reproducing head 18-1. In such a case, the leaked component of the signal becomes a noise having undesired effects against a signal reproduced by the reproducing head 18-1, and thus C/N ratio of the reproduced signal is decreased. In order to eliminate the noise, the rotary head drum 11 is provided with a shielding described below.

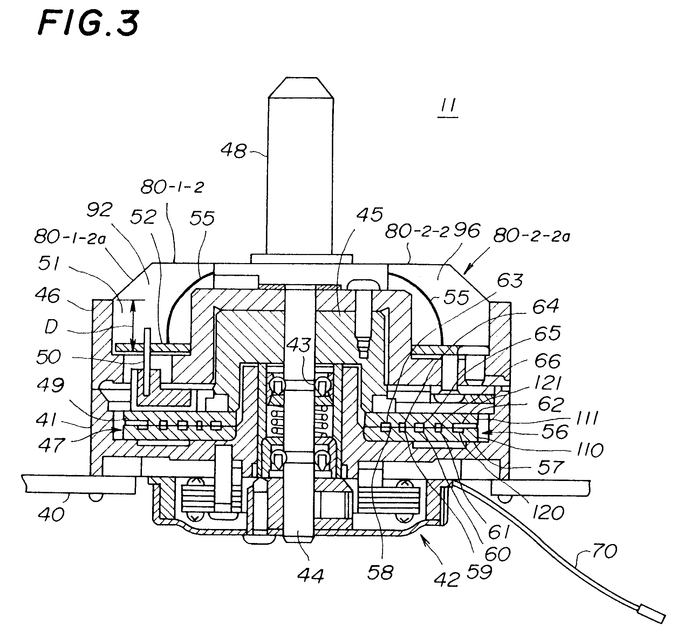

A description will now be given, with reference to Fig.3, of a basic structure of the rotary head drum 11.

The rotary head drum comprises, as shown in Fig.3: a lower drum 41 fixed to a chassis 40 of the DAT 10, a drum motor 42 positioned under the lower drum 41; a flange 45 fixed to a rotational shaft 44 of the motor 42, which shaft is supported by a direct bearing 43; an upper drum 46 provided with the heads 17-1, 17-2, 18-1, 18-2 on a bottom surface thereof, which upper drum is fitted to the rotational shaft and is fixed to the flange 45; a rotary transformer 47; and a slip ring 48.

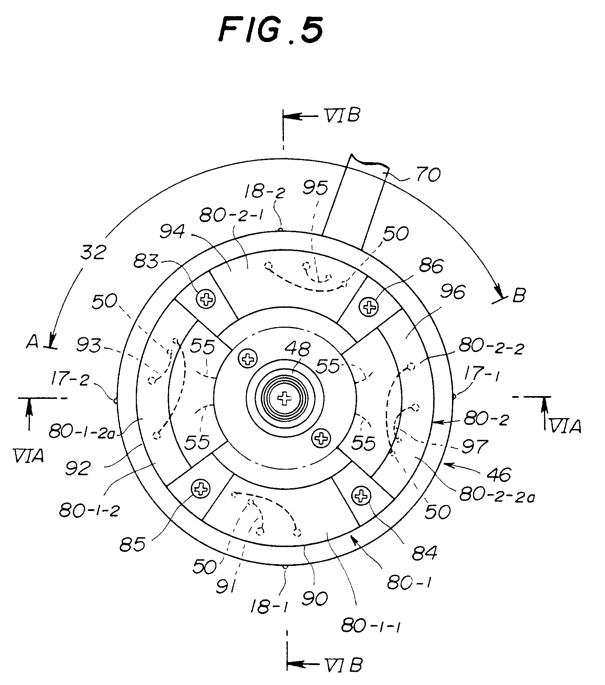

On a rotor 49 of the rotary transformer 47, there are provided four pins 50 at 90 degrees intervals with respect to the circumference thereof. A circular printed circuit board 52 is provided in an annular recess 51 of the upper drum 46. The pins 50 run through holes formed on the upper drum 46 and pass through the printed circuit board 52. A top end of each of the pins 50 is soldered to a pad formed on the circuit board 52. A lead wire (refer to Fig.5) extending from each of the heads 17-1, 17-2, 18-1, 18-2 is connected to the respective pads on the circuit board 52.

Accordingly the rotor 49 and each of the heads 17-1, 17-2, 18-1, 18-2 are connected to each other via the respective pins 50, the printed circuit board 52, and the respective lead wires, that is, the rotor 49 is electrically connected to each of the heads via respective parts located inside the recess 51 of the upper drum 46. Additionally, each of the recording heads 17-1, 17-2 is connected to the slip ring 48 by a lead wire 55.

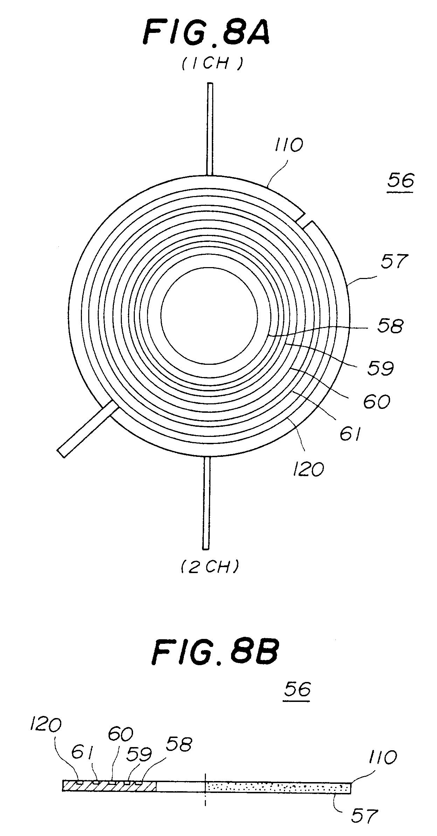

The rotary transformer 47 comprises a stator 56 and the rotor 49. As shown in Figs.8A and 8B, a stator body 57 of the stator 56 is incorporated with, in order starting from the inner side, a coil 58, a short ring 59, a coil 60 and a short ring 61.

Similarly to the stator 56, the rotor 49 has a rotor body 62, a coil 63, a short ring 64, a coil 65 and a short ring 66.

A cable 70 comprises a flexible printed circuit (FPC), and connects the rotary transformer 47 to an external circuit (not shown in the Figure).

A description will now be given of a shielding structure which is an essential part of the present invention.

### (1) A first shielding structure

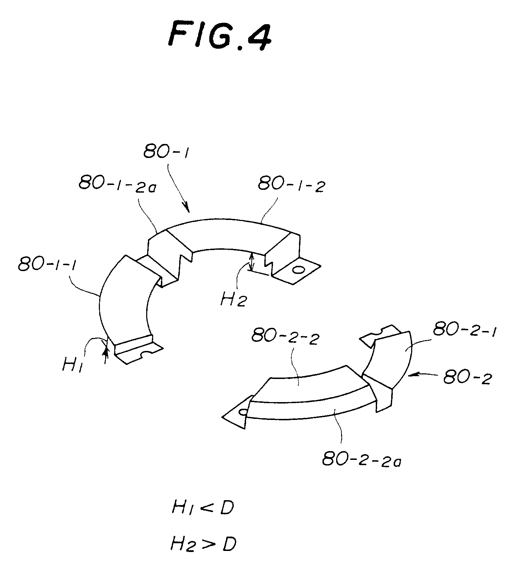

As shown in Fig.4, the interconnection shielding members 80-1, 80-2, shaped in a half ring, have an identical shape. The interconnection shielding member 80-1 is formed with a first channel-shape portion 80-1-1 and a second channel-shape portion 80-1-2. Another interconnection shielding member 80-2 is also formed with a first channel-shape portion 80-2-1 and a second channel-shape portion 80-2-2. Each of the first channel-shape portions 80-1-1 and 80-2-1 has a height H₁ slightly smaller than a depth D of the annular recess 51 of the upper drum 46. Each of the second channel-shape portions 80-1-2 and 80-2-2 has a height H₂ slightly greater than the above-mentioned depth D so that the second portions can accommodate the lead wires 55 without coming in contact with the lead wires 55.

Since the value of the height H₂ is greater than the value of the depth D, eaves 80-1-2a and 80-2-2a are formed on the second channel-shape portions, respectively, so that the eaves 80-1-2a and 80-2-2a cover openings formed between a top edge of the annular recess 51 of the upper drum 46 and each of the second channel-shape portions 80-1-2 and 80-2-2, respectively.

The shielding members 80-1, 80-2 are formed of, for example, a steel plate, and preferably a steel plate to which copper plating has been applied.

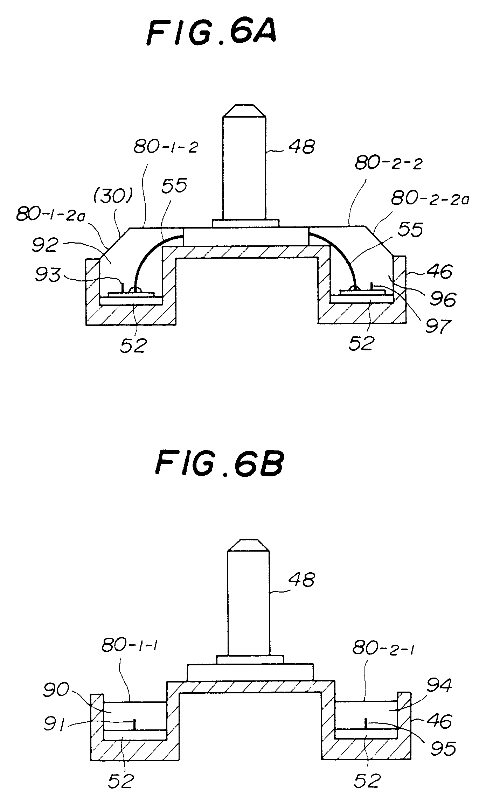

As shown in Fig.3, the shielding members 80-1, 80-2 are fitted into the annular recess 51, and are attached on the printed circuit board 52. The shielding members 80-1, 80-2 are combined as shown in Fig.5 and Figs.6A, 6B, and are secured together by screws 83 and 84. The shielding members 80-1, 80-2 are further secured by screws 85 and 86, respectively, so as to be firmly fixed to the circuit board 52.

In a state where the shielding members 80-1, 80-2 are attached on the circuit board 52, since each perpendicular wall of the channel-shape portions acts as a separation wall, each of the channel-shape portions forms respective independent cells in cooperation with the printed circuit board 52 and the upper drum 15.

In Fig.5, a reference numeral 90 indicates a shelter room formed by the channel-shape portion 80-1-1. As shown in Fig.6B, inside the shelter room 90 is accommodated an interconnecting part 91 provided between the reproducing head 18-1 and the pin 50. A reference numeral 92 indicates a shelter room formed by the channel-shape portion 80-1-2. As shown in Fig.6A, inside the shelter room 92 is accommodated the lead wire 55 and an interconnecting part 93 provided between the recording head 17-1 and the pin 50. A reference numeral 94 indicates a shelter room formed by the channel-shape portion 80-2-1. As shown in Fig.6B, inside the shelter room 94 is accommodated an interconnecting part 95 provided between the reproducing head 18-2 and the pin 50. A reference numeral 96 indicates a shelter room formed by the channel-shape portion 80-2-2. As shown in Fig.6A, inside the shelter room 96 is accommodated the lead wire 55 and an interconnecting part 97 provided between the recording head 17-2 and the pin 50.

As mentioned above, each of the interconnecting parts 91, 93, 95, 97 is accommodated in the respective shelter rooms 90, 92, 94, 96 which are respectively closed, and thereby a component of recording signal leaking from the interconnecting parts 93 and 97 cannot leak out of the shelter rooms 92 and 96. Additionally, if the component of the recording signal should leak outside the shelter room 92 or 96, the component of the recording signal is blocked by the wall of the shelter rooms 90 and 94, which condition results in preventing intrusion of the component of the recording signal into the interconnecting parts 91 and 95.

### (2) A second shielding structure

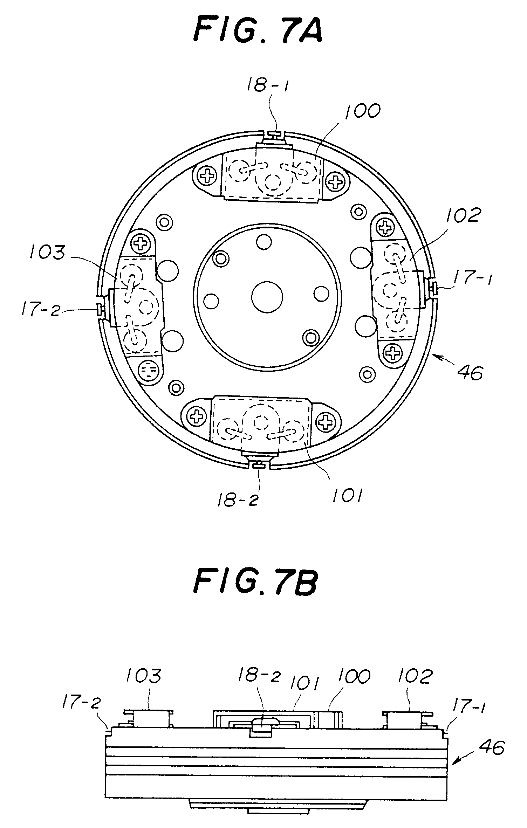

Magnetic head shielding members 100-103 shown in Figs.7A and 7B are formed of a copper plated steel plate by bending the plate so as to have generally a channel shape.

Each of the shielding members 100-103 are secured by screws onto a bottom surface of the upper drum 46 in a state where each of the shielding members 100-103 covers the respective recording heads 17-1, 17-2 and the reproducing heads 18-1 and 18-2.

By the provision of the shielding members 100-103, if the component of the recording signal leaks from the recording heads 17-1, 17-2, the leaking component cannot leak beyond the shielding members 102 and 103. Additionally, if there exists a noise outside the shielding members 102 and 103, the noise cannot reach to the reproducing heads 18-1, 18-2 because the noise is blocked by the shielding members 100 and 101.

Therefore, leaking component of the recording signal is prevented from entering the reproducing heads 18-1, 18-2 which are in the operating condition.

### (3) A third shielding structure

As shown in Figs.8A and 8B, a gold film 110 is deposited on a periphery of the stator body 57 by means of vapor deposition or sputtering. Similarly, a gold film 111 is deposited also on a periphery of the rotor body 62.

These gold films 110, 111 serve as a shield against static electricity. That is, an effect of externally applied static electricity is eliminated by the gold films. Accordingly, an effect of externally applied static electricity on the coils 58, 60, 63, 65 provided inside the rotary transformer 47 is eliminated.

It should be noted that instead of the gold films, a metal film having a low electric resistance such as a silver film, a copper film, or an aluminum film may be used.

### (4) A fourth shielding structure

The short rings 120 and 121 shown in Fig.3 and Figs.8A, 8B are located outside the short rings 61 and 66, respectively. That is, the stator 56 is provided with the double short rings 61 and 120 outside the outer coil 60. Similarly, the rotor 49 is provided with double short rings 66 and 121 outside the outer coil 65.

Accordingly, a magnetic effect from outside of the drum 11 is eliminated with surety by double short rings 120, 121, 61, 66. Thus, an magnetic effect from outside on the coils 58, 60, 63, 65 provided inside the rotary transformer 47 is eliminated with surety. The rotary transformer 47 can be therefore operated in good condition without undergoing an adverse magnetic effect from outside.

### (5) A fifth shielding structure

The cable 70 extends from an area 32, as shown in Fig.5, in which area the record heads 17-1, 17-2 are not in operation because the area 32 is an area where the tape 13 is not wound on the drum 11. Accordingly, when the recording heads pass above the cable 70, the recording heads 17-1, 17-2 are not in operation, and thus there is no leakage of the component of the recording signal.

Therefore, there is no noise leaking from the recording head 17-1, 17-2 which noise enters into the cable 70.

According to the provision of the above five shielding structures, (1) to (5), a noise caused by intrusion of a leaking component of a recording signal, into the reproduced signal, and a noise caused by an externally applied magnetic effect or static electricity are considerably reduced, and thus a C/N ratio sufficient to derive a digital signal can be obtained. Therefore, a C/N ratio sufficient to derive a digital signal can be obtained.

It should be noted that the present invention may be applied to, for example, a rotary head drum of a video tape recorder.

The present invention is not limited to the specifically disclosed embodiments and variations and modifications may be made without departing from the scope of the present invention.

## Claims

1. A tape recorder having a rotary head drum (11) comprising a lower drum (41), a rotatable upper drum (46) having at least one or more recording heads (17-1, 17-2) and at least one or more reproducing heads (18-1, 18-2), and a rotary transformer (47) provided between said lower drum (41) and said upper drum (46) so as to perform a transmission of signals therebetween, a magnetic tape being wound on said rotary head drum (11) at a predetermined angle, said predetermined angle being greater than an angle formed between one of said recording heads (17-1, 17-2) and an adjacent one of said reproducing heads (18-1, 18-2) along a periphery of said upper drum (46), said tape recorder being characterized in that:
said rotary head drum (11) comprises shielding means for shielding interconnecting parts between each of said recording heads (17-1, 17-2) and each of said reproducing heads (18-1, 18-2) and said rotary transformer (47), said shielding means (80-1, 80-2, 100-103) individually shielding each of said interconnecting parts (91, 93, 95, 97) including respective one of said recording heads (17-1, 17-2) and of said reproducing heads (18-1, 18-2);
and said rotary head drum (11) further comprises rotary transformer shielding means (110, 111, 120, 121), provided to said rotary transformer (47), for shielding against an external noise intruding into said rotary transformer (47).

2. The tape recorder as claimed in claim 1, characterized in that said rotary head drum (11) further comprises a cable (70) which connects said rotary transformer (47) to an external circuit, said cable (70) extending from a portion of a periphery of said rotary head drum (70), which portion is positioned in an area (32) where said magnetic tape is not wound on said upper drum (46).

3. The tape recorder as claimed in claim 1, characterized in that said shielding means comprises magnetic head shielding means (100-103) provided around each of said recording heads (17-1, 17-2) and said reproducing heads (18-1, 18-2), for shielding individually each of said recording heads (17-1, 17-2) and of said reproducing heads (18-1, 18-2); and comprises also interconnecting part shielding means (80-1, 80-2), provided around each of said interconnecting parts, for shielding individually each of said interconnecting parts.

4. The tape recorder as claimed in claim 3, characterized in that said magnetic head shielding means (100-103) comprises shaped metal plates (100-103) which cover individually each of said recording heads (17-1, 17-2) and of said reproducing heads (18-1, 18-2) so as to shield individually each of said recording heads (17-1, 17-2) and of reproducing heads (18-1, 18-2).

5. The tape recorder as claimed in claim 4, characterized in that each of said shaped metal plates (100-103) is made of a copper plated steel plate.

6. The tape recorder as claimed in claim 3, characterized in that said interconnecting part shielding means (80-1, 80-2) comprises shaped metal plates (80-1, 80-2) which cover individually each of said interconnecting parts (91, 93, 95, 97) between each of said recording heads (17-1, 17-2) and said reproducing heads (18-1, 18-2) and said rotary transformer (47) so as to shield individually each of said interconnecting parts (91, 93, 95, 97).

7. The tape recorder as claimed in claim 6, characterized in that each of said shaped metal plates (80-1, 80-2) is made of a copper plated steel plate.

8. The tape recorder as claimed in claim 1, characterized in that said rotary transformer (47) comprises a stator (56) and a rotor (49), and wherein said rotary transformer shielding means comprises metal films (110, 111), having a low electric resistance, provided on a periphery of each of said stator (56) and said rotor (49), and said rotary transformer shielding means further comprises two pairs of concentrically provided short rings positioned on opposing surfaces of said stator (56) and said rotor (49) near a periphery of said rotary transformer (47).

9. The tape recorder as claimed in claim 8, characterized in that each of said metal films (110, 111) is made of one of materials selected from among gold, silver, copper and aluminum.
